# EUROPÄISCHE PATENTSCHRIFT

(11) **EP 0 612 987 B1**
(45) Veröffentlichungstag und Bekanntmachung des Hinweises auf die Patenterteilung: **21.01.1998**
(21) Anmeldenummer: 93118731.4
(22) Anmeldetag: 22.11.1993
(51) Int. Cl.: G01G 23/37

(54) **Verfahren zum Aufstarten einer Waage und eine elektronische Waage**
Method for starting a balance and an electronic balance
Procédé pour initialiser une balance et une balance électronique

(30) Priorität: 26.02.1993 CH 590/93
(43) Veröffentlichungstag der Anmeldung: 31.08.1994
(73) Patentinhaber: Mettler-Toledo GmbH, 8606 Greifensee (CH)
(72) Erfinder: Bachmann, Rudolf, CH-8614 Bertschikon (CH); Hartman, Beat, CH-8307 Effretikon (CH)

(56) Entgegenhaltungen:
- WO-A-88/00371
- DE-A- 2 806 091
- DE-A- 3 213 015
- DE-A- 3 638 210
- DE-A- 3 942 311

## Beschreibung

Gegenstand der Erfindung ist ein Verfahren zum Aufstarten einer Waage, bei der die Aufstartparameter und -funktionen mit einer Tastatur in die Signalverarbeitungseinheit eingegeben und auf einem Anzeigefeld angezeigt werden.
Gegenstand der Erfindung ist weiter eine elektronische Waage, mit einer Messzelle, einer digitalen Signalverarbeitungseinheit für die Verarbeitung und Anzeige unterschiedlicher Wägeprogramme, einem Anzeigefeld zum alphanumerischen Anzeigen der Messwerte und einer Tastatur zum elektronischen Nullstellen der Anzeige sowie zum Anwählen und Konfigurieren eines Aufstartprogrammes.

Neuere elektronische Waagen weisen für die Anzeige des Wägeresultates sowie für die Anzeige weiterer Funktionen ein alphanumerisches Anzeigefeld auf. Eine solche Waage ist aus der DE-A1-36 38 210 bekannt. Diese verfügt über eine digitale Signalverarbeitungseinheit, die mehrere Programme aufweist, sowie über ein Anzeigefeld und eine Tarataste zum elektronischen Nullstellen der Anzeige. Die Tarataste ist in mehrere Teilbereiche unterteilt, wobei jeder Teilbereich auf einem getrennten Schaltelement abgestützt ist, so dass softwaregesteuert entweder alle Schaltelemente die gleiche Funktion, nämlich das Tarieren, auslösen, oder jedes Schaltelement eine andere Funktion auslöst. Es wird dadurch erreicht, dass die Tarataste für einfache Wägeprogramme als breite Taste zur Verfügung steht, die an beliebiger Stelle bedient werden kann. Die Idee bestand also darin, in einfachen Operationen die üblicherweise in Teilbereiche aufgetrennte Taste in ihrer gesamten Breite als Tarataste benutzen zu können. Für die Anwahl eines anderen Wägeprogrammes wird folglich eine zusätzliche Taste benötigt. Nach der Betätigung dieser zusätzlichen Umschalt-Taste erscheinen über der Tarataste die Auswahlparameter des mit der zusätzlichen Taste angewählten anderen Programmes. Mit der nun unterteilten Tarataste können die einzelnen Programmpunkte aktiviert werden.

Aus der DE-A1-28 06 091 ist eine Personenwaage mit einer Plattform bekannt, die beim Betreten die elektrische Schaltung einschaltet und nach dem Verlassen der Plattform der Waage diese noch für einige Zeit eingeschaltet hält, um das Wägeergebnis während einer gewissen Zeit noch auf der Anzeige erscheinen zu lassen. Bei dieser bekannten Waage erfolgt das Einschalten der Energiezufuhr durch die vertikale Verschiebung der Plattform bei der Belastung durch die zu wägende Person. Der beim Betreten der Waage betätigte Schalter ersetzt den üblicherweise seitlich der Waage angeordneten Handschalter, mit dem die Waagenelektronik ein- und ausschaltbar ist. Zudem ist die Elektronik mit einer Zeitverzögerung ausgestattet, die das Ausschalten verzögert, so dass die Anzeige nach der Entlastung der Plattform noch für eine Weile aufrechterhalten bleibt.

Die Aufgabe der vorliegenden Erfindung besteht darin, ein Verfahren und eine Waage zu schaffen, die aus dem Standby-Modus direkt in den zuvor konfigurierten Wägemodus aufgestartet werden kann.

Gelöst wird diese Aufgabe durch ein Verfahren, bei dem die Waage durch Auflegen eines Gewichtes auf die Waagschale oder durch Betätigen der Tarataste aufgestartet und unter Überspringen der Prüfanzeigen softwaremässig direkt in den Wägemodus mit Gewichtsanzeige des aufgelegten Gewichtes geführt wird, sowie durch eine Waage mit einem zuschaltbaren Schnellstart-Programm (QuickStart), bei dem beim Aufstarten der Waage aus dem Standby-Modus durch Betätigen einer Taste oder durch Auflegen eines Gewichtes auf die Waagschale die optisch angegebenen Prüfanzeigen übersprungen werden und unmittelbar der Wägemodus angezeigt wird.

Das Überspringen der Prüfanzeigen beim Einschalten der Waage durch Auflegen eines Gewichtes oder durch das Betätigen z.B. der Tarataste erleichtert der Bedienungsperson das Arbeiten. Es werden von der Bedienungsperson auch keinerlei Kenntnisse bezüglich der Handhabung der Waage vorausgesetzt. Der automatische Durchlauf des Prüfmodus nach einem Stromausfall und die dann notwendige Bestätigung der Richtigkeit der Anzeigen stellt sicher, dass die Waagenkonfiguration dann auf jeden Fall optisch überprüft wird.

Anhand illustrierter Ausführungsbeispiele wird die Erfindung erläutert. Es zeigen:
- Figur 1: eine schematische Darstellung einer Präzisionswaage mit einem Anzeige- und Tastenfeld,
- Figur 2: das Anzeigefeld mit dem Hauptmenu zu Beginn der Programmwahl und die darunterliegende balkenförmige Taste,
- Figur 3: das Anzeigefeld nach der Anwahl APPL (application) im Hauptmenu,
- Figur 4: das Anzeigefeld nach der Anwahl APPL (application) im Hauptmenu, Darstellung der in Figur 3 nicht sichtbaren Parameter nach dem Betätigen von " > > ",
- Figur 5: das Anzeigefeld nach der Anwahl +/- WEIGHT,
- Figur 6: das Anzeigefeld nach der Anwahl WEIGHTENTRY,
- Figur 7: das Anzeigefeld nach der Anwahl MINWEIGHT mit der Zahlenreihe 0 bis 9,
- Figur 8: das Anzeigefeld nach der Anwahl einer ersten Zahl "17" in der oberen Zeile, und
- Figur 9: ein Diagramm des SYSTEM-Modus

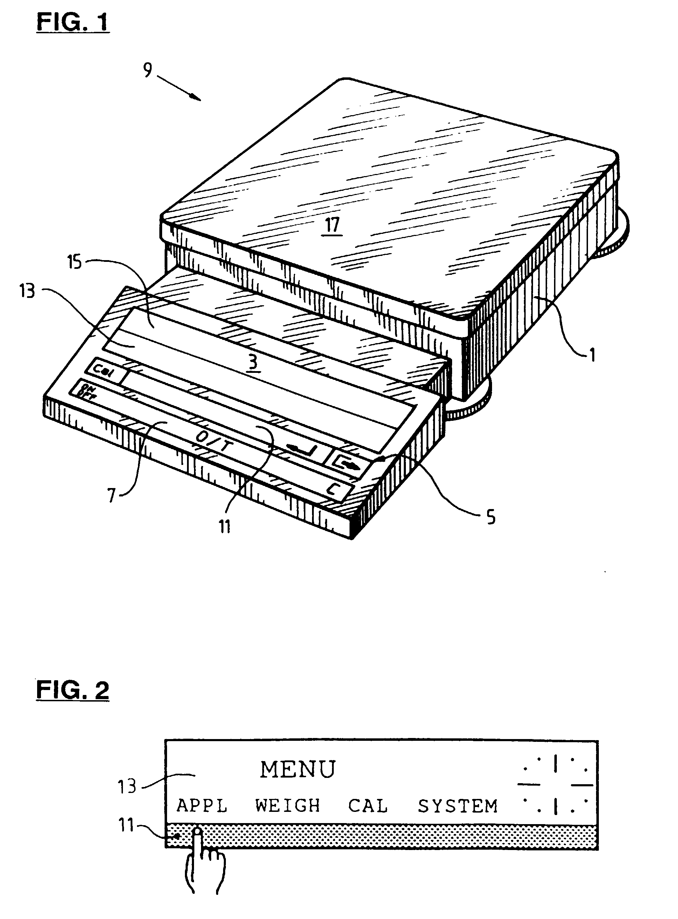

Die in Figur 1 dargestellte Waage 9 weist ein Waagengehäuse 1 mit einem alphanumerischen Anzeigefeld 3 und mit einem Tastaturfeld 5 mit zwei balkenförmigen Tasten 7 und 11 auf. Das Anzeigefeld 3 ist in zwei Zeilen 13 und 15 aufgeteilt. Anstelle von zwei kann selbstverständlich auch eine grössere Anzahl Zeilen oder eine vollgraphische Darstellung, die auch die Anzeige von Piktogrammen erlaubt, vorgesehen sein. Mit Bezugszeichen 17 ist eine flache Waagschale dargestellt. Alternativ dazu einer kann natürlich auch eine in einem Windschutzgehäuse eingebaute Waagschale vorgesehen sein (keine Darstellung).

Unter "Betätigen" wird entweder das Drücken einer Taste und Ueberwinden des mechanischen Widerstandes oder das Berühren einer als Softkey oder Touchpad oder Touchpanel ausgebildeten Taste verstanden. Es wird hier davon ausgegangen, dass mindestens die Taste 11 als Softkey oder Touchbar ausgebildet ist und in viele kleine Abschnitte unterteilt ist. Im dargestellten Beispiel wird in der Taste 11 potentiometrisch über eine Widerstandsschicht, die auf der Schaltfolie aufgebracht ist, die X-Koordinate ermittelt. Die Auflösung der X-Koordinate hängt von der Qualität der Widerstandsschicht und der Auswerteelektronik ab; sie ist beispielsweise maximal ca. 0,5 mm, d.h. beim Berühren der Taste 11 erkennt die Auswerteelektronik den Ort der Berührung mit einer Auflösung in Richtung der X-Koordinate von mindestens 0,5 mm. Der ermittelte Wert der X-Koordinate wird einer oberhalb der Berührungsstelle im Anzeigefeld 13 aufleuchtenden Funktion zugeordnet.

### Beispiel 1

Zum Anwählen und Konfigurieren wird nach dem Einschalten der Waage durch Betätigen der "ON" Taste, die Teil der Tara-Taste sein kann, und durch Betätigen der MENU-Taste 11 das Hauptmenu im Anzeigefeld 13 aufgerufen. Es erscheinen dann folgende Angaben:
"APPL (application), WEIGH (weight), CAL (calibration), SYST (system)" Die ENTER- und DRUCKBEFEHL-Funktionen können separaten Tasten zugeordnet Fig.1) oder ebenfalls im Anzeigefeld 13 aufgezeigt und über die Taste 11 aktivierbar sein.

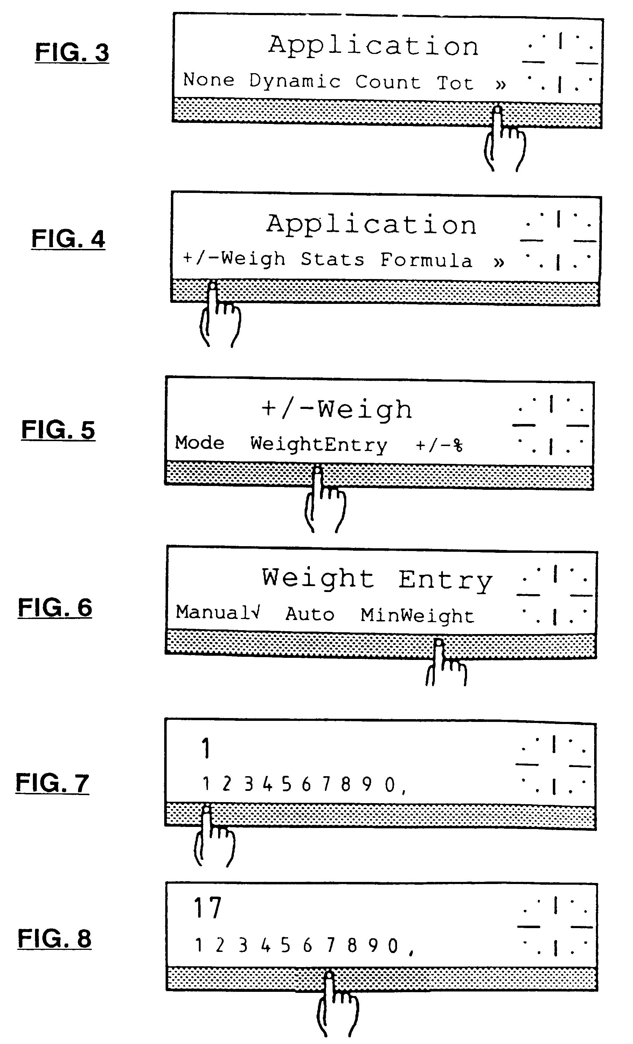

Das Berühren der Taste 11 im Bereich direkt unterhalb APPL interpretiert die Waagenelektronik als Befehl, den Menu-Punkt APPL vergrössert dargestellt auf dem Anzeigefeld 15 erscheinen zu lassen. In der Anzeigezeile (Anzeigefeld 13) erscheinen nun die Unterfunktionen innerhalb der Funktion APPL (Fig. 3). Die in der Grundoperation APPL möglichen Funktionen sind wiederum nebeneinander und über der Taste 11 angeordnet im Anzeigefeld 13 dargestellt und können durch Betätigen der Taste, d.h. Berühren unterhalb der gewünschten Funktion, angewählt werden. Die Anordnung der Anzeigen ist dabei bezüglich der X-Koordinate nicht einer festen Zuordnung unterworfen; sie lässt sich an die Erfordernisse bezüglich Platzbedarf der Angaben im Anzeigefeld anpassen. Wenn nicht alle Funktionen nebeneinander im Anzeigefeld Platz finden, wird dies durch das Scroll-Zeichen ( > > ) angezeigt. Das Berühren der Taste 11 unterhalb > > lässt die weiteren Funktionen im Anzeigefeld 13 erscheinen. Nach der Markierung von z.B. +/- WEIGH, erfolgt die Anzeige der Unterfunktion der Funktion +/-WEIGH im Anzeigefeld 13 (Figur 5). Als nächstes könnte innerhalb dieser Funktionen beispielsweise die Funktion WEIGHTENTRY angewählt und sichtbar gemacht werden (Figur 6). Als letztes in der eine Baumstruktur aufweisenden APPL-Funktion kann nun die Funktion MINWEIGHT angewählt werden, und es erscheinen dann im Anzeigefeld 13, wiederum nebeneinander angeordnet, die Zahlen "1 2 3 4 5 6 7 8 9 0" sowie Satzzeichen, > >, u.dgl., welche vorerst einzeln mit der Taste 11 markiert und erst durch Bestätigen mit der ENTER-Taste zu einer mehrstelligen Zahl zusammengefügt einen gewünschten minimalen Wägewert ergeben. Allfällig notwendige Kommastellen können ebenfalls mit der Taste 11 eingesetzt werden.
Durch längeres Betätigen der MENU-Taste wird der eingegebene Wert gespeichert und im Anzeigefeld 13 erscheinen nun einzig die ausgewählten Wägeparameter und -funktionen. Der Tastenbereich unterhalb dem dann nicht beschrifteten Anzeigefeld 13 ist beim Wägen inaktiv. Im oberen Anzeigefeld 15 erfolgt numerisch die Gewichtsanzeige und dahinter die Masseinheit (kg, g, oz, ...). Eine alternative Masseinheit kann durch Betätigen der Taste 11 angezeigt und ausgewählt werden, sofern sie zuvor im SYSTEM-Modus bestimmt worden ist.

### Beispiel 2

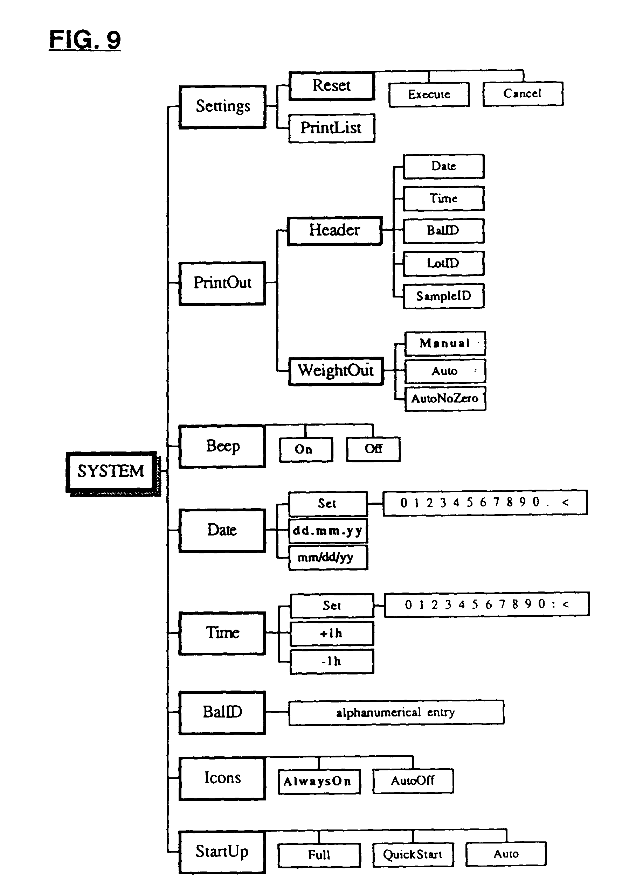

Das Berühren der Taste 11 direkt unterhalb SYSTEM im Hauptmenu interpretiert die Waagenelektronik als Befehl, den Menu-Punkt SYSTEM als nächstes auf dem Anzeigefeld 13 erscheinen zu lassen. In Figur 9 ist der gesamte SYSTEM-Baum dargestellt. Aus diesem sind jeweils aufrufbare Ebenen innerhalb des Modus SYSTEM schematisch dargestellt. Diese Figur ersetzt die einzelnen Anzeigemodi, wie sie für die Applikation (APPL) in den Figuren 1 bis 8 dargestellt sind. Die in der Grundoperation SYSTEM möglichen Funktionen sind wiederum nebeneinander und direkt über der Taste 11 angeordnet im Anzeigefeld 13 dargestellt und können durch Betätigen der Taste, d.h. Berühren unterhalb der gewünschten Funktion, aufgerufen werden.

Das Berühren der Taste 11 im SYSTEM-Modus direkt unterhalb STARTUP interpretiert die Waagenelektronik als weiteren Befehl, den Menu-Punkt STARTUP als nächstes auf dem Anzeigefeld 13 erscheinen zu lassen (Figur 9). Die in der Grundoperation STARTUP möglichen Funktionen (FULL, QUICKSTART, AUTO) werden wiederum nebeneinander und direkt über der Taste 11 angeordnet im Anzeigefeld 13 dargestellt und können durch Betätigen der Taste, d.h. Berühren unterhalb der gewünschten Funktion, ausgewählt werden. Man beachte, dass für die Auswahl dieser Funktionen auf der Taste in x-Richtung bedeutend mehr Platz vorhanden ist wie im vorausgegangenen Beispiel, da nur drei Alternativen angezeigt sind.
Nach der Markierung von FULL und Bestätigen mit der ENTER-Taste, wird der Modus FULL aktiviert. Ein Haken oder eine Kontrastdarstellung zeigt den ausgewählten Modus nach dem Berühren der Taste optisch an und bleibt solange erhalten, bis ein anderer Modus bestimmt wird.
In der Waagenelektronik ist nun der übliche Aufstartablauf nach dem Berühren der Tarataste im Standby-Modus aktiviert, d.h., Lampentest, Modellname, Anzeige "0,00 g" aktiviert. Die Bedienungsperson muss somit vor Beginn der ersten Wägung die (waagenspezifischen) vorgegebenen optischen Kontrollen durchführen und zudem bestätigen. Dieser "manuelle" Aufstart entspricht dem Stand der Technik.
Durch die Markierung QUICKSTART und Bestätigen mit der ENTER-Taste wird ein modifizierter Aufstart aktiviert. Mit diesem wird die Waage ohne vorausgehenden Lampentest, Angabe des Modellnamens etc. aufgestartet und eine Bestätigung entfällt. Durch Betätigen der TARA-Taste oder das Auflegen eines Gewichtes mit einem vorgebbaren Minimalwert erscheint unmittelbar die Gewichtsangabe des aufgelegten Gewichtes.
Die dritte Möglichkeit ist die Aktivierung des "AUTO"-Modus. Dieser ermöglicht einen vollautomatischen Aufstart der Waage, der nach einem Stromunterbruch ausgelöst wird.

Nach der Bestätigung von FULL, QUICKSTART oder AUTO erscheint in der Anzeige wiederum das übergeordnete Menu, sofern nicht durch langes Drücken eine unmittelbare Rückkehr ins Hauptmenu angestrebt wird.

## Patentansprüche

1. Verfahren zum Aufstarten einer Waage (9), bei dem die Waage (9) aus dem Standby-Modus durch Auflegen eines Gewichtes auf die Waagschale oder durch Betätigen der Tarataste (7) aufgestartet und unter Überspringen der Prüfanzeigen softwaremässig direkt in einen Wägemodus mit Anzeige des aufgelegten Gewichtes oder mit Nullanzeige geführt wird.

2. Verfahren nach Anspruch 1, wobei nach einem Stromunterbruch die Waage erst nach Bestätigung der Prüfanzeigen in einen Wägemodus geführt wird.

3. Elektronische Waage, mit einer Messzelle, einer digitalen Signalverarbeitungseinheit für die Verarbeitung und Anzeige unterschiedlicher Wägeprogramme, einem Anzeigefeld (3) zum alphanumerischen Anzeigen der Messwerte und einem Tastaturfeld (5) zum elektronischen Tarieren der Anzeige sowie zum Anwählen und Konfigurieren eines Aufstartprogrammes, gekennzeichnet durch ein zuschaltbares Schnellstart-Programm (QuickStart), bei dem beim Aufstarten der Waage aus dem Standby-Modus durch Betätigen einer Taste (7) oder durch Auflegen eines Gewichtes auf die Waagschale die optisch angegebenen Prüfanzeigen übersprungen werden und unmittelbar der Wägemodus angezeigt wird.

4. Waage nach Anspruch 3, dadurch gekennzeichnet, dass sie mit einem Programm versehen ist, welches nach einem Stromunterbruch vor dem Schnellstart-Programm das gesamte Aufstartprogramm mit den Prüfanzeigen durchläuft und diese anzeigt.

## Claims

1. A process for starting up a balance (9), in which the balance (9) is started up from the stand-by mode by applying a weight to the weighing pan or by actuating the calibration key (7) and, skipping the test displays, is taken by software means directly into a weighing mode with display of the applied weight or with zero display.

2. A process according to claim 1 wherein after an interruption in power the balance is only put into a weighing mode after confirmation of the test displays.

3. An electronic balance having a measuring cell, a digital signal processing unit for processing and displaying different weighing programs, a display panel (3) for alphanumeric display of the measurement values and a keyboard panel (5) for electronic calibration of the display and for selecting and configuring a start-up program, characterised by a rapid-start program (QuickStart) which can be switched on, in which when the balance is started up out of the stand-by mode by actuation of a key (7) or by applying a weight to the weighing pan the optically indicated test displays are skipped and the weighing mode is directly displayed.

4. A balance according to claim 3 characterised in that it is provided with a program which after an interruption in power prior to the rapid-start program runs through the entire start-up program with the test displays and displays the latter.

## Revendications

1. Procédé pour initialiser une balance (9), dans lequel la balance (9) peut être initialisée à partir du mode d'attente en posant un poids sur son plateau ou en actionnant la touche de tarage (7) et peut, sur les instructions du logiciel, passer directement à un mode de pesée avec affichage du poids posé ou du zéro en contournant les messages de test.

2. Procédé selon la revendication 1, dans lequel, après une coupure de courant, la balance ne passe dans un mode de pesée qu'après confirmation des messages de test.

3. Balance électronique, comprenant une cellule de mesure, une unité de traitement numérique de signaux pour le traitement et l'affichage de divers programmes de pesée, un bandeau d'affichage (3) pour l'affichage alphanumérique des valeurs mesurées, et un clavier (5) pour le tarage électronique de l'affichage ainsi que pour la sélection et la configuration d'un programme d'initialisation, caractérisée par un programme commutable de démarrage rapide (QuickStart) qui permet, lors de l'initialisation de la balance à partir du mode d'attente, de contourner les messages optiques de test en actionnant une touche (7) ou en posant un poids sur le plateau et d'afficher directement le mode de pesée.

4. Balance selon la revendication 3, caractérisée en ce qu'elle comporte un programme qui, après une coupure du courant, exécute, avant le programme de démarrage rapide, l'intégralité du programme d'initialisation avec les messages de test et affiche ces derniers.
